# EUROPEAN PATENT APPLICATION

(11) **EP 4 354 078 A1**
(43) Date of publication of application: **17.04.2024**
(21) Application number: 22804555.5
(22) Date of filing: 09.05.2022
(51) Int. Cl.: G01B 7/16, H01M 10/48

(54) **SENSOR MODULE AND BATTERY PACK**

(30) Priority: 17.05.2021 JP 2021082909
(71) Applicant: Minebea Mitsumi Inc., Kitasaku-gun, Nagano 3890293 (JP)
(72) Inventor: MORI, Masao, Kitasaku-gun, Nagano 389-0293 (JP)
(74) Representative: Zabel, Julia Elisabeth
(86) International application number: PCT/JP2022/019728
(87) International publication number: WO 2022/244642

(57) **Abstract**

This sensor module has a strain-generating body that is made of metal and is adhered to an outer surface of a casing housing a battery; and a strain gauge that is provided to one surface of the strain-generating body and and uses a Cr mixed phase film as a resistor. A plurality of adhesion regions that are adhered to the casing and are separated from one another are demarcated on the other surface of the strain-generating body, and the strain gauge is positioned in a region of the one surface of the strain-generating body that is not opposite from said adhesion regions.

## Description

### Technical Field

The present invention relates to a sensor module and a battery pack.

### Background

In a battery pack used for a mobile device, etc., a battery may expand due to a decrease in the life of the battery in the battery pack, causing liquid leakage, etc. Therefore, it is important to detect the expansion of the battery in the battery pack, and various devices for detecting the expansion of a battery have been proposed.

An example is a device for detecting the internal pressure by a strain gauge arranged in the inner space of a lithium secondary battery and displaying the detected internal pressure on a display. In this device, it is possible to determine whether a lithium secondary battery is normal or abnormal by monitoring the displayed internal pressure (see, e.g., Patent Document 1.).

### Citation List

### Patent Document

[Patent Document 1] Japanese Unexamined Patent Application Publication No. 2002-289265

### Summary

### Problem to be Solved by the Invention

However, the strain caused by the expansion of the battery is small, and, therefore, it has been difficult to detect the strain with high accuracy by the conventionally proposed devices.

The present invention has been made in view of the above points, and an object of the present invention is to provide a sensor module capable of accurately detecting the state of a battery.

### Means to solve the problem

A sensor module includes a strain generating body that is made of metal, the strain generating body being adhered to an outer surface of a housing configured to house a battery; and a strain gauge including a Cr mixed phase film as a resistor, the strain gauge being provided on one side of the strain generating body, wherein on another side of the strain generating body, a plurality of adhesive regions separated from each other and adhered to the housing are defined, and the strain gauge is arranged on the one side of the strain generating body in a region that is not opposite to the adhesive regions.

### Effects of the Invention

According to the disclosed technology, it is possible to provide a sensor module capable of accurately detecting the state of a battery.

### Brief Description of Drawings

[FIG. 1] FIG. 1 is a plan view illustrating an example of a battery pack according to a first embodiment.
[FIG. 2] FIG. 2 is a cross-sectional view illustrating an example of a battery pack according to the first embodiment.
[FIG. 3] FIG. 3 is a cross-sectional view (part 1) illustrating an example of a state in which a housing is deformed due to expansion of a battery.
[FIG. 4] FIG. 4 is a plan view illustrating an example of a strain gauge according to the first embodiment.
[FIG. 5] FIG. 5 is a cross-sectional view illustrating an example of a strain gauge according to the first embodiment.
[FIG. 6] FIG. 6 is a plan view illustrating an example of a battery pack according to a second embodiment.
[FIG. 7] FIG. 7 is a cross-sectional view illustrating an example of a battery pack according to the second embodiment.
[FIG. 8] FIG. 8 is a cross-sectional view (part 2) illustrating an example of a state in which the housing is deformed by expansion of the battery.

### Description of Embodiments

Hereinafter, embodiments for implementing the present invention will be described with reference to the drawings. In each drawing, the same elements may be denoted by the same reference numerals and duplicate descriptions may be omitted.

In the following embodiments and modifications, examples of detecting the expansion of a battery are mainly described, but embodiments are not limited thereto, and the sensor module according to each embodiment can detect various states of a battery. The various states of the battery include, for example, contraction of the battery, presence or absence of protrusions and recesses, shape distribution, temperature, etc., other than the expansion of a battery.

### <First embodiment>

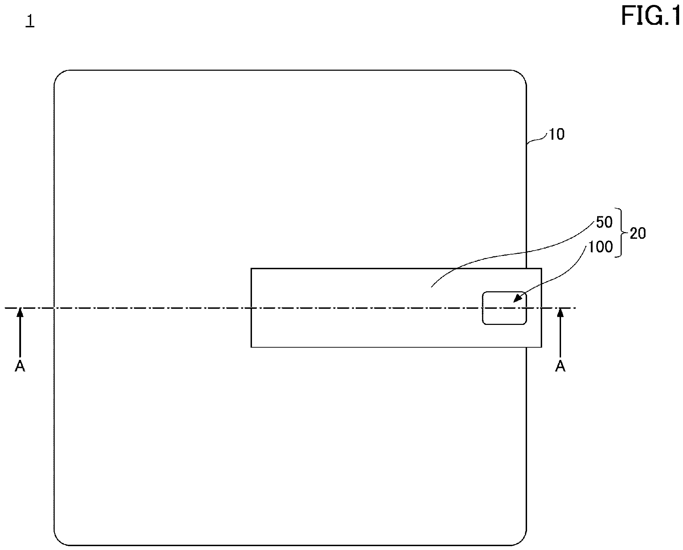

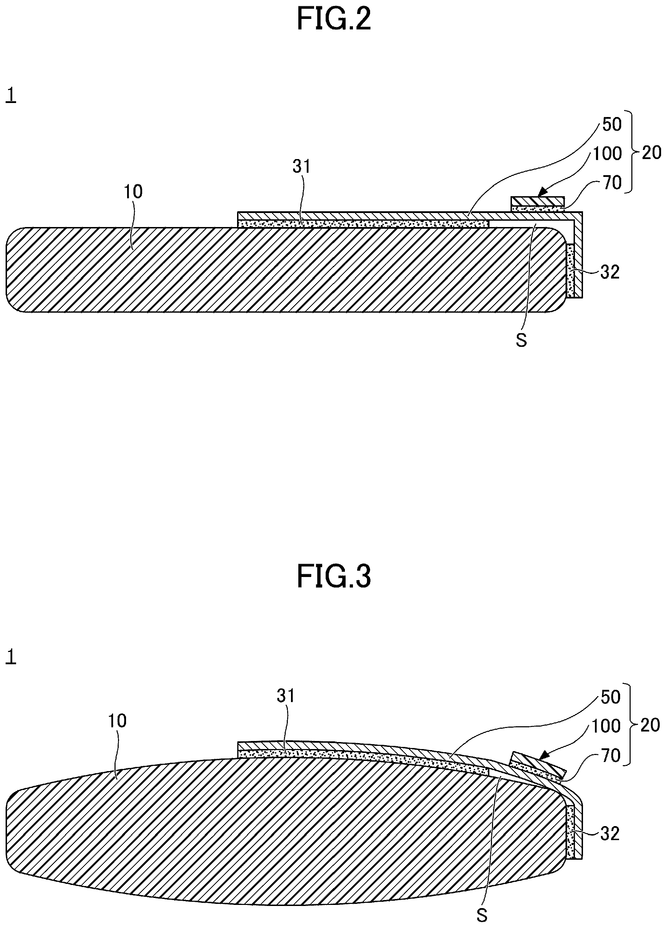

FIG. 1 is a plan view illustrating an example of a battery pack according to the first embodiment. FIG. 2 is a cross-sectional view illustrating an example of a battery pack according to the first embodiment, illustrating a cross section along a line A-A in FIG. 1.

Referring to FIGS. 1 and 2, a battery pack 1 has a housing 10, a sensor module 20, and adhesive layers 31 and 32. The battery pack 1 is a battery pack in which the sensor module 20 is adhered to the outer surface of the housing 10 for housing the battery, and can be widely used for various electronic devices such as personal computers and smartphones, portable terminals, etc.

The housing 10 is a case for housing the battery, and is formed of, for example, metal or resin. A member other than the battery, such as a circuit board or an external output terminal, may be housed inside the housing 10. The battery housed in the housing 10 is, for example, a secondary battery such as a lithium-ion battery, and the housed plurality of the secondary batteries are suitably connected in parallel and/or series.

The sensor module 20 is a sensor for detecting the deformation of the housing 10 caused by the expansion of the battery. The sensor module 20 has a strain generating body 50 and a strain gauge 100 arranged on one surface of the strain generating body 50 through an adhesive layer 70.

The strain generating body 50 is rectangular in a plan view and is bent in an L-shape in cross-sectional view. The strain gauge 100 is provided, via the adhesive layer 70, on the upper surface of the long side of the the L-shape of the strain generating body 50, in the vicinity of the bend where the long side and the short side of the L-shape are connected. That is, the strain gauge 100 is arranged above the corner where the upper surface and the side surface of the housing 10 are connected.

The material of the adhesive layer 70 is not particularly limited and can be appropriately selected according to the purpose, but for example, epoxy resin, modified epoxy resin, silicone resin, modified silicone resin, urethane resin, modified urethane resin, or the like can be used. A double-sided tape may be used as the adhesive layer 70. The thickness of the adhesive layer 70 is not particularly limited and can be appropriately selected according to the purpose, but can be, for example, approximately 0.1 um to 50 µm.

A plurality of adhesive regions separated from each other to be adhered to the housing 10 are defined on the lower surface of the strain generating body 50. In the example of FIG. 2, one adhesive region is defined at the end of the long side of the L-shape and one adhesive region is defined at the end of the short side of the L-shape, and the adhesive layer 31 is provided at the adhesive region of the long side and the adhesive layer 32 is provided at the adhesive region of the short side. In the strain generating body 50, the L-shaped bent portion is a non-adhesive region that is not adhered to the housing 10.

The long side of the L-shape of the strain generating body 50 is adhered to the upper surface of the housing 10 via the adhesive layer 31, and the short side of the L-shape of the strain generating body 50 is adhered to the side surface of the housing 10 via the adhesive layer 32. The adhesive layers 31 and 32 may be similar to the adhesive layer 70, for example.

On the opposite surface side (the housing 10 side) of the region where the strain gauge 100 of the strain generating body 50 is arranged, an adhesive layer is not arranged, and a space S is provided. That is, the strain gauge 100 is arranged in a region on the upper surface of the strain generating body 50 that is not on the opposite side of an adhesive region. By providing the space S, the strain generating body 50 can easily expand and contract in accordance with the deformation of the housing 10 caused by the expansion of the battery, and, therefore, the change in the resistance value of the strain gauge 100 increases, and the deformation of the housing 10 can be detected with high sensitivity.

The strain generating body 50 is made of metal. As the material of the strain generating body 50, for example, SUS (stainless steel), Al, Fe, or the like can be used. Among these, SUS is preferably used in terms of the low height and the ease of correcting the strain gauge with respect to the strain generating body. The thickness of the strain generating body 50 may be, for example, approximately greater than or equal to 0.05 mm and less than or equal to 0.2 mm. By making the thickness of the strain generating body 50 greater than or equal to 0.05 mm, the necessary rigidity can be obtained and the space S can be secured. By making the thickness of the strain generating body 50 less than or equal to 0.2 mm, the strain generating body 50 can be sufficiently stretched.

FIG. 3 is a cross-sectional view (part 1) illustrating an example of a state in which the housing is deformed by expansion of the battery. As illustrated in FIG. 3, for example, when gas is generated inside the battery arranged in the housing 10, the battery expands, the upper surface and the lower surface of the housing 10 are raised in the center, and the corners are also deformed. Then, strain is generated in the center and corners of the housing 10.

In FIG. 3, it can be seen that the strain generating body 50 is also deformed due to deformation of the housing 10 caused by expansion of the battery. As a result, the resistance value of the strain gauge 100 changes, and deformation of the housing 10 can be detected. That is, expansion of the battery housed inside the housing 10 can be detected.

Thus, deformation of the housing 10 due to expansion of the battery can be sensitively detected, by bonding the strain generating body 50 to the housing 10 such that a space S is provided between the lower surface of the strain generating body 50 and the housing 10, and the strain gauge 100 is arranged above the space S which is a region not opposite to the adhesive region on the upper surface of the strain generating body 50.

The strain gauge 100 will now be described.

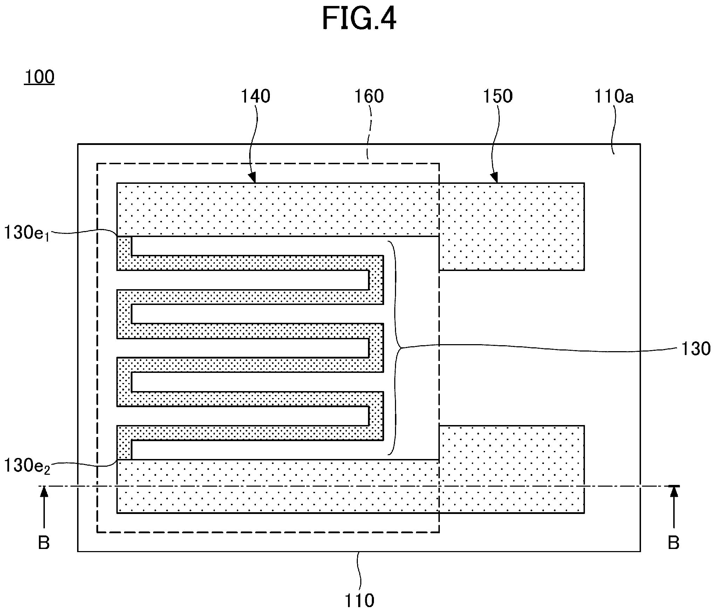

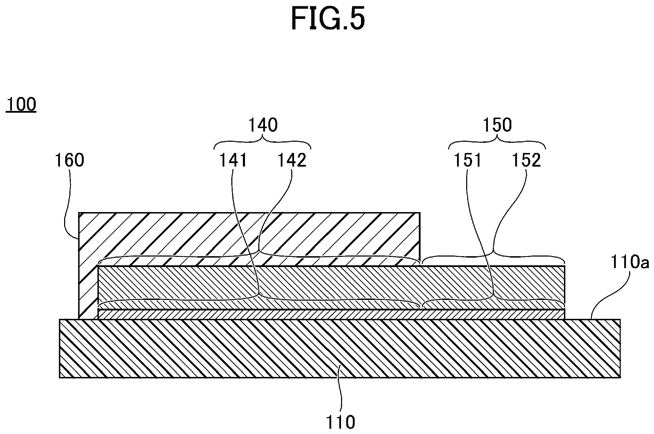

FIG. 4 is a plan view illustrating an example of a strain gauge according to the first embodiment. FIG. 5 is a cross-sectional view illustrating an example of a strain gauge according to the first embodiment, illustrating a cross section along the line B-B in FIG. 4. Referring to FIGS. 4 and 5, the strain gauge 100 includes a base material 110, a resistor 130, a wiring 140, an electrode 150, and a cover layer 160. In FIG. 4, as a matter of convenience, only the outer edge of the cover layer 160 is illustrated with a dashed line. The cover layer 160 may be provided as necessary.

The base material 110 is a member serving as a base layer for forming the resistor 130 and the like and has flexibility. The thickness of the base material 110 is not particularly limited and can be appropriately selected according to the purpose, but can be, for example, 5 um to 500 um. In particular, when the thickness of the base material 110 is 5 um to 200 µm, it is preferable in terms of the transmissibility of strain from the surface of the strain generating body bonded to the lower surface of the base material 110 via an adhesive layer, etc., and the dimensional stability against the environment, and when the thickness is greater than or equal to 10 µm, it is more preferable in terms of the insulating property.

The base material 110 can be formed of, for example, an insulating resin film such as a PI (polyimide) resin, an epoxy resin, a PEEK (polyetheretherketone) resin, a PEN (polyethylene naphthalate) resin, a PET (polyethylene terephthalate) resin, a PPS (polyphenylene sulfide) resin, an LCP (liquid crystal polymer) resin, a polyolefin resin, etc. A film refers to a member having a thickness of approximately less than or equal to 500 um and having flexibility.

The term "formed of an insulating resin film" does not prevent the base material 110 from inlcuding filler, impurities, or the like in the insulating resin film. For example, the base material 110 may be formed of an insulating resin film inlcuding a filler such as silica or alumina.

Materials for the base material 110 other than resin include, for example, crystalline materials such as SiO₂, ZrO₂ (including YSZ), Si, Si₂N₃, Al₂O₃ (including sapphire), ZnO, perovskite-based ceramics (CaTiOs, BaTiOs), and amorphous glass. Further, as materials for the base material 110, metals such as aluminum, aluminum alloy (duralumin), and titanium may be used. In this case, for example, an insulating film is formed on the base material 110 made of metal.

The resistor 130 is a thin film formed in a predetermined pattern on the base material 110, and is a sensitive part where a change in resistance occurs upon receiving strain. The resistor 130 may be formed directly on an upper surface 110a of the base material 110, or through other layers on the upper surface 110a of the base material 110. In FIG. 4, the resistor 130 is illustrated in a dark pearskin pattern as a matter of convenience.

The resistor 130 has a structure in which a plurality of long and thin portions are arranged at predetermined intervals with the longitudinal directions thereof directed in the same direction (the direction of the line B-B in FIG. 4), and the ends of adjacent long and thin portions are connected with each other so that the resistor folds back in a zigzag manner as a whole. The longitudinal direction of the plurality of long and thin portions is the grid direction, and the direction perpendicular to the grid direction is the grid width direction (the direction perpendicular to the line B-B in FIG. 4).

The end portions in the longitudinal direction of two long and thin portions located on the outermost sides of the grid width direction, are bent in the grid width direction to respectively form ends 130e₁ and 130e₂ in the grid width direction of the resistor 130. Each of the ends 130e₁ and 130e₂ in the grid width direction of the resistor 130 is electrically connected to the corresponding electrode 150 via the wiring 140. That is, the wiring 140 electrically connects each of the ends 130e₁ and 130e₂ in the grid width direction of the resistor 130 with the corresponding electrode 150.

The resistor 130 may be formed of, for example, a material inlcuding Cr (chromium), a material inlcuding Ni (nickel), or a material inlcuding both Cr and Ni. That is, the resistor 130 can be formed of a material inlcuding at least one of Cr and Ni. The material inlcuding Cr includes, for example, a Cr mixed phase film. The material inlcuding Ni includes, for example, Cu-Ni (copper nickel). The material inlcuding both Cr and Ni includes, for example, Ni-Cr (nickel chromium).

Here, the Cr mixed phase film is a film in which Cr, CrN, Cr₂N, etc., are mixed. The Cr mixed phase film may inlcude unavoidable impurities such as chromium oxide.

The thickness of the resistor 130 is not particularly limited and can be appropriately selected according to the purpose, but can be, for example, approximately 0.05 um to 2 um. In particular, when the thickness of the resistor 130 is greater than or equal to 0.1 um, it is preferable in that the crystallinity (for example, the crystallinity of α-Cr) of the crystals constituting the resistor 130 is improved. Further, when the thickness of the resistor 130 is less than or equal to 1 µm, it is more preferable in that cracks in the film and warpage from the base material 110 caused by internal stress in the film constituting the resistor 130 can be reduced. The width of the resistor 130 can be made to be approximately 10 um to 100 µm, for example, by optimizing the required specifications such as the resistance value and the lateral sensitivity and taking into account the measures against disconnection.

For example, when the resistor 130 is a Cr mixed phase film, the stability of the gauge characteristics can be improved by using α-Cr (alpha chromium), which is a stable crystalline phase, as the main component. Further, when the resistor 130 uses α-Cr as the main component, the gauge rate of the strain gauge 100 can be 10 or more, and the gauge rate temperature coefficient TCS and the resistance temperature coefficient TCR can be set within the range of -1000 ppm/°C to +1000 ppm/°C. Here, the main component means that the target material occupies 50 wt% or more of the total material constituting the resistor, but from the viewpoint of improving the gauge characteristics, the resistor 130 preferably inlcudes 80 wt% or more of α-Cr, and more preferably 90 wt% or more. Note that α-Cr is Cr having a bcc structure (body-centered cubic lattice structure).

When the resistor 130 is a Cr mixed phase film, CrN and Cr₂N included in the Cr mixed phase film are preferably 20 wt% or less. When CrN and Cr₂N included in the Cr mixed phase film are 20 wt% or less, the lowering of the gauge rate can be prevented.

The proportion of Cr₂N in CrN and Cr₂N is preferably greater than or equal to 80 wt% and less than 90 wt%, and more preferably greater than or equal to 90 wt% and less than 95 wt%. When the proportion of Cr₂N in CrN and Cr₂N is greater than or equal to 90 wt% and less than 95 wt%, the decrease in TCR (negative TCR) becomes more significant due to Cr₂N having semiconducting properties. Further, by reducing ceramization, brittle fracture is reduced.

On the other hand, when a small amount of N₂ or atomic N is mixed or present in the film, this substance escapes from the film due to an external environment (e.g., a high-temperature environment), resulting in a change in film stress. By creating chemically stable CrN, it is possible to obtain a stable strain gauge without generating the unstable N.

The wiring 140 is formed on the base material 110 and is electrically connected to the resistor 130 and the electrode 150. The wiring 140 has a first metal layer 141 and a second metal layer 142 stacked on the upper surface of the first metal layer 141. The wiring 140 is not limited to a straight line and can be any pattern. The wiring 140 can be any width and any length. In FIG. 4, the wiring 140 and the electrode 150 are illustrated in a pearskin pattern lighter than that of the resistor 130 as a matter of convenience.

The electrode 150 is formed on the base material 110 and is electrically connected to the resistor 130 via the wiring 140, and is formed in a substantially rectangular shape with a wider width than the wiring 140, for example. The electrode 150 is a pair of electrodes for outputting to the outside a change in the resistance value of the resistor 130 caused by strain, and is bonded to, for example, a lead wire or a flexible substrate for external connection. The base material 110 and the wiring 140 may be extended so that the electrode 150 is positioned at the end of the strain generating body 50. This facilitates electrical connection between the electrode 150 and the outside.

The electrode 150 has a pair of first metal layers 151 and a second metal layer 152 stacked on the upper surface of each first metal layer 151. The first metal layer 151 is electrically connected to the ends 130e₁ and 130e₂ of the resistor 130 via the first metal layer 141 of the wiring 140. The first metal layer 151 is formed in a substantially rectangular shape in plan view. The first metal layer 151 may be formed in the same width as the wiring 140.

Although the resistor 130, the first metal layer 141, and the first metal layer 151 are denoted by separate reference numerals as a matter of convenience, these elements can be integrally formed of the same material in the same process. Accordingly, the resistor 130, the first metal layer 141, and the first metal layer 151 have substantially the same thickness. Further, although the second metal layer 142 and the second metal layer 152 are denoted by separate reference numerals as a matter of convenience, these elements can be integrally formed of the same material in the same process. Therefore, the thickness of the second metal layer 142 and the thickness of the second metal layer 152 are substantially the same.

The second metal layers 142 and 152 are formed of a material having a lower resistance than the resistor 130 (the first metal layers 141 and 151). The materials of the second metal layers 142 and 152 are not particularly limited as long as the materials are lower in resistance than the resistor 130, and can be appropriately selected according to the purpose. For example, when the resistor 130 is a Cr mixed phase film, the materials of the second metal layers 142 and 152 include Cu, Ni, Al, Ag, Au, Pt, or an alloy of any of these metals, a compound of any of these metals, or a stacked film in which any of these metals, alloys, or compounds are appropriately stacked. The thickness of the second metal layers 142 and 152 is not particularly limited and can be appropriately selected according to the purpose, but can be, for example, approximately 3 um to 5 µm.

The second metal layers 142 and 152 may be formed on a part of the upper surfaces of the first metal layers 141 and 151, or may be formed on the entire upper surfaces of the first metal layers 141 and 151. One or more other metal layers may be stacked on the upper surface of the second metal layer 152. For example, the second metal layer 152 may be a copper layer, and a gold layer may be stacked on the upper surface of the copper layer. Alternatively, the second metal layer 152 may be a copper layer, and a palladium layer and a gold layer may be successively stacked on the upper surface of the copper layer. By using the top layer of the electrode 150 as a gold layer, the solder wettability of the electrode 150 can be improved.

As described above, the wiring 140 has a structure in which the second metal layer 142 is stacked on the first metal layer 141 made of the same material as the resistor 130. Therefore, because the wiring 140 has a lower resistance than the resistor 130, it is possible to prevent the wiring 140 from functioning as a resistor. As a result, the strain detection accuracy by the resistor 130 can be improved.

That is, by providing the wiring 140 having a lower resistance than the resistor 130, the substantially sensitive portion of the strain gauge 100 can be limited to the local region where the resistor 130 is formed. Therefore, the strain detection accuracy by the resistor 130 can be improved.

In particular, in a highly sensitive strain gauge with a gauge rate of 10 or more using a Cr mixed phase film as the resistor 130, limiting the substantially sensitive portion to a local region where the resistor 130 is formed by making the wiring 140 have a lower resistance than the resistor 130, will have a remarkable effect on improving the strain detection accuracy. Further, making the wiring 140 have a lower resistance than the resistor 130 also has an effect on reducing the lateral sensitivity.

The cover layer 160 is formed on the base material 110 and covers the resistor 130 and the wiring 140 and exposes the electrode 150. A portion of the wiring 140 may be exposed from the cover layer 160. By providing a cover layer 160 covering the resistor 130 and the wiring 140, mechanical damage or the like can be prevented from occurring to the resistor 130 and the wiring 140. Further, by providing the cover layer 160, the resistor 130 and the wiring 140 can be protected from moisture or the like. The cover layer 160 may be provided so as to cover the entire portion excluding the electrode 150.

The cover layer 160 may be formed of, for example, an insulating resin such as a PI resin, an epoxy resin, a PEEK resin, a PEN resin, a PET resin, a PPS resin, or a composite resin (for example, silicone resin, polyolefin resin). The cover layer 160 may include fillers or pigments. The thickness of the cover layer 160 is not particularly limited and can be appropriately selected according to the purpose, but can be, for example, approximately 2 um to 30 µm.

To manufacture the strain gauge 100, first, the base material 110 is prepared and a metal layer (referred to as a metal layer A as a matter of convenience) is formed on the upper surface 110a of the base material 110. The metal layer A is a layer which is finally patterned to become the resistor 130, the first metal layer 141, and the first metal layer 151. Accordingly, the material and thickness of the metal layer A are the same as those of the resistor 130, the first metal layer 141, and the first metal layer 151.

The metal layer A can be formed by, for example, a magnetron sputtering method targeting a raw material from which the metal layer A can be formed. Instead of the magnetron sputtering method, the metal layer A may be formed by a reactive sputtering method, a vapor deposition method, an arc ion plating method, a pulsed laser deposition method, or the like.

From the viewpoint of stabilizing the gauge characteristics, it is preferable to perform vacuum film forming to form a functional layer having a predetermined thickness as a base layer, on the upper surface 110a of the base material 110 by, for example, a conventional sputtering method before forming the metal layer A.

In the present application, the functional layer refers to a layer having a function of promoting crystal growth of the metal layer A (the resistor 130) which is at least an upper layer. The functional layer preferably has a function of preventing oxidation of the metal layer A by oxygen and moisture included in the base material 110 and a function of improving adhesion between the base material 110 and the metal layer A. The functional layer may further have other functions.

The insulating resin film constituting the base material 110 includes oxygen and moisture, and, therefore, especially when the metal layer A includes Cr, the Cr forms an auto-oxidation film, it is effective that the functional layer has a function to prevent oxidation of the metal layer A.

The material of the functional layer is not particularly limited as long as the material has a function of promoting crystal growth of at least the metal layer A (the resistor 130) that is the upper layer, and can be suitably selected according to the purpose, for example, one or more metals selected from the group consisting of Cr (chromium), Ti (titanium), V (vanadium), Nb (niobium), Ta (tantalum), Ni (nickel), Y (yttrium), Zr (zirconium), Hf (hafnium), Si (silicon), C (carbon), Zn (zinc), Cu (copper), Bi (bismuth), Fe (iron), Mo (molybdenum), W (tungsten), Ru (ruthenium), Rh (rhodium), Re (rhenium), Os (osmium), Ir (iridium), Pt (platinum), Pd (palladium), Ag (silver), Au (gold), Co (cobalt), Mn (manganese), Al (aluminum), alloys of any metal of this group, or compounds of any metal of this group.

Examples of the alloys include FeCr, TiAl, FeNi, NiCr, CrCu, and the like. Examples of the compounds include TiN, TaN, Si₃N₄, TiO₂, Ta₂O₅, SiO₂, and the like.

When the functional layer is formed of a conductive material such as a metal or alloy, the thickness of the functional layer is preferably less than or equal to 1/20 of the thickness of the resistor. In such a range, crystal growth of α-Cr can be promoted, and a part of the current flowing through the resistor flows through the functional layer, thereby preventing a decrease in the sensitivity of strain detection.

When the functional layer is formed of a conductive material such as a metal or alloy, the thickness of the functional layer is preferably less than or equal to 1/50 of the thickness of the resistor. In this range, crystal growth of α-Cr can be promoted, and it is possible to prevent a situation where a part of the current flowing through the resistor flows through the functional layer such that the sensitivity of strain detection is reduced.

If the functional layer is formed of a conductive material such as a metal or alloy, it is more preferable that the thickness of the functional layer is less than or equal to 1/100 of the thickness of the resistor. In this range, it is possible to further prevent a situation where a part of the current flowing through the resistor flows through the functional layer such that the sensitivity of strain detection is reduced.

When the functional layer is formed of an insulating material such as an oxide or nitride, the thickness of the functional layer is preferably 1 nm to 1 um. In such a range, the crystal growth of α-Cr can be promoted, and the film can be formed easily without forming cracks in the functional layer.

When the functional layer is formed of an insulating material such as an oxide or nitride, the thickness of the functional layer is more preferably 1 nm to 0.8 um. In this range, crystal growth of α-Cr can be promoted and the film can be formed more easily without forming cracks in the functional layer.

If the functional layer is formed of an insulating material such as an oxide or nitride, the thickness of the functional layer is more preferably 1 nm to 0.5 um. In this range, crystal growth of α-Cr can be promoted and the film can be formed more easily without forming cracks in the functional layer.

The planar shape of the functional layer is patterned almost identically to the planar shape of the resistor illustrated in FIG. 4, for example. However, the planar shape of the functional layer is not limited to being almost identical to the planar shape of the resistor. When the functional layer is formed of an insulating material, it is not necessary to pattern the same shape as the planar shape of the resistor. In this case, the functional layer may be formed in a solid shape at least in the region where the resistor is formed. Alternatively, the functional layer may be formed in a solid shape over the entire upper surface of the base material 110.

Further, when the functional layer is formed of an insulating material, the thickness of the functional layer is made relatively thick so as to be greater than or equal to 50 nm and less than or equal to 1 um, and by forming the functional layer in a solid shape, the thickness and surface area of the functional layer increase, and, therefore, heat generated by the resistor can be dissipated to the base material 110 side. As a result, in the strain gauge 100, a decrease in measurement accuracy caused by self-heating of the resistor can be prevented.

For example, the functional layer can be formed by vacuum film forming by a conventional sputtering method in which Ar (argon) gas is introduced into the chamber by targeting a raw material from which the functional layer can be formed. By using the conventional sputtering method, the functional layer is formed while etching the upper surface 110a of the base material 110 with Ar, so that an adhesion improvement effect can be obtained by minimizing the film formation amount of the functional layer.

However, this is an example of a film forming method of the functional layer, and the functional layer may be formed by another method. For example, an adhesion improvement effect may be obtained by activating the upper surface 110a of the base material 110 by plasma treatment using Ar or the like prior to the film forming of the functional layer, and then the functional layer may be formed by vacuum film forming by a magnetron sputtering method.

The combination of the material of the functional layer and the material of the metal layer A is not particularly limited and can be appropriately selected according to the purpose, but, for example, a Cr mixed phase film can be formed by using Ti as the functional layer and α-Cr (α-chromium) as the main component of the metal layer A.

In this case, for example, the metal layer A can be formed by a magnetron sputtering method in which Ar gas is introduced into the chamber by targeting a raw material from which the Cr mixed phase film can be formed. Alternatively, the metal layer A can be formed by a reactive sputtering method in which an appropriate amount of nitrogen gas is introduced into the chamber together with Ar gas by targeting pure Cr. At this time, the proportion of CrN and Cr₂N included in the Cr mixed phase film and the proportion of Cr₂N in CrN and Cr₂N can be adjusted by changing the amount of nitrogen gas introduced and the pressure (nitrogen partial pressure) or by adjusting the heating temperature by providing a heating step.

In these methods, the growth surface of the Cr mixed phase film is defined by the functional layer composed of Ti, and the Cr mixed phase film mainly composed of α-Cr, which is a stable crystal structure, can be formed. Further, the Ti constituting the functional layer diffuses into the Cr mixed phase film, thereby improving the gauge characteristics. For example, the gauge rate of the strain gauge 100 may be 10 or more, and the gauge rate temperature coefficient TCS and the resistance temperature coefficient TCR may be within the range of -1000 ppm/°C to +1000 ppm/°C. When the functional layer is formed of Ti, Ti or TiN (titanium nitride) may be included in the Cr mixed phase film.

When the metal layer A is a Cr mixed phase film, the functional layer composed of Ti has all of the functions of promoting crystal growth of the metal layer A, preventing oxidation of the metal layer A by oxygen and moisture included in the base material 110, and improving adhesion between the base material 110 and the metal layer A. The same applies when Ta, Si, Al, and Fe are used instead of Ti as the functional layer.

Thus, by providing the functional layer in the lower layer of the metal layer A, the crystal growth of the metal layer A can be promoted, and the metal layer A composed of a stable crystal phase can be produced. As a result, the stability of the gauge characteristics can be improved in the strain gauge 100. Further, by diffusing the material constituting the functional layer into the metal layer A, the gauge characteristics can be improved in the strain gauge 100.

Next, the second metal layer 142 and the second metal layer 152 are formed on the upper surface of the metal layer A. The second metal layer 142 and the second metal layer 152 can be formed by, for example, a photolithography method.

Specifically, a seed layer is first formed to cover the upper surface of the metal layer A by, for example, a sputtering method or an electroless plating method. Next, a photosensitive resist is formed on the entire surface of the upper surface of the seed layer, and an opening is formed to expose an area for forming the second metal layer 142 and the second metal layer 152 by exposure and development. At this time, the pattern of the second metal layer 142 can be made to have any shape by adjusting the shape of the opening of the resist. For example, a dry film resist or the like can be used as the resist.

Next, for example, the second metal layer 142 and the second metal layer 152 are formed on the seed layer exposed in the opening, by an electroplating method using the seed layer as a power supply path. The electroplating method is suitable in that the tact is high and a low-stress electroplating layer can be formed as the second metal layer 142 and the second metal layer 152. By making a thick electroplating layer low-stress, warping of the strain gauge 100 can be prevented. Note that the second metal layer 142 and the second metal layer 152 may be formed by electroless plating.

Next, the resist is removed. The resist can be removed, for example, by dipping the resist material into a dissolvable solution.

Next, a photosensitive resist is formed on the entire surface of the top surface of the seed layer, the photosensitive resist is exposed and developed, and patterned into a planar shape similar to that of the resistor 130, wiring 140, and the electrode 150 of FIG. 4. For example, a dry film resist can be used as the resist. Then, by using the resist as an etching mask, the metal layer A and the seed layer exposed from the resist are removed to form the planar resistor 130, the wiring 140, and the electrode 150 illustrated in FIG. 4.

For example, unnecessary portions of the metal layer A and the seed layer can be removed by wet etching. If a functional layer is formed under the metal layer A, the functional layer is patterned by etching into the planar shape illustrated in FIG. 4 in the same manner as the resistor 130, the wiring 140, and the electrode 150. At this point, a seed layer is formed on the resistor 130, the first metal layer 141, and the first metal layer 151.

Next, by using the second metal layer 142 and the second metal layer 152 as etching masks, the second metal layer 142 and the second metal layer 152 are formed by removing the unnecessary seed layer exposed from the second metal layer 142 and the second metal layer 152. The seed layer immediately below the second metal layer 142 and the second metal layer 152 remain. For example, the unnecessary seed layer can be removed by wet etching using an etchant by which the seed layer is etched but the functional layer, the resistor 130, the wiring 140, and the electrode 150 are not etched.

Then, if necessary, the cover layer 160 that covers the resistor 130 and the wiring 140 and that exposes the electrode 150, is provided on the upper surface 110a of the base material 110, thereby completing the strain gauge 100. For example, the cover layer 160 can be formed by stacking a semi-cured thermosetting insulating resin film on the upper surface 110a of the base material 110 so as to cover the resistor 130 and the wiring 140 and expose the electrode 150, and curing the film by heating the film. The cover layer 160 can be formed by coating the upper surface 110a of the base material 110 with a liquid or paste thermosetting insulating resin so as to cover the resistor 130 and the wiring 140 and expose the electrode 150, and curing the film by heating the film.

Thus, the Cr mixed phase film is highly sensitive. Therefore, by using, in the sensor module 20, the strain gauge 100 in which the Cr mixed phase film is used as the resistor 130, the sensitivity of the resistance value with respect to the expansion of the battery is greatly improved compared with the case where the resistor 130 is formed of Cu-Ni or Ni-Cr. When the resistor 130 is formed of the Cr mixed phase film, the sensitivity of the resistance value with respect to the expansion of the battery is approximately 5 to 10 times higher than the case where the resistor 130 is formed of Cu-Ni or Ni-Cr. Therefore, the expansion of the battery can be accurately detected by forming the resistor 130 of the Cr mixed phase film.

### <Second embodiment>

In the second embodiment, an example of a sensor module in which the strain generating body has a different shape, and a battery pack to which the sensor module is applied, is described. In the second embodiment, the description of the same elements as in the previously described embodiment may be omitted.

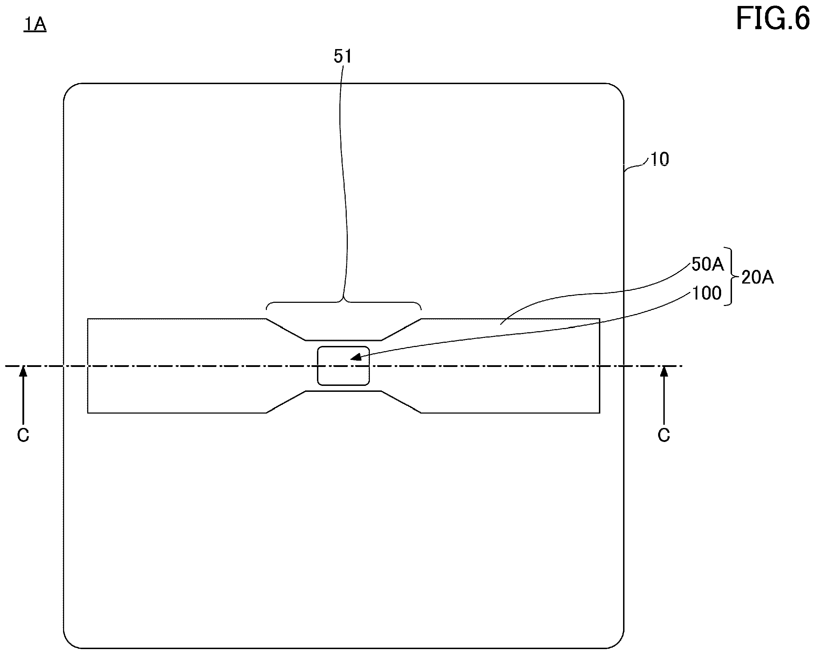

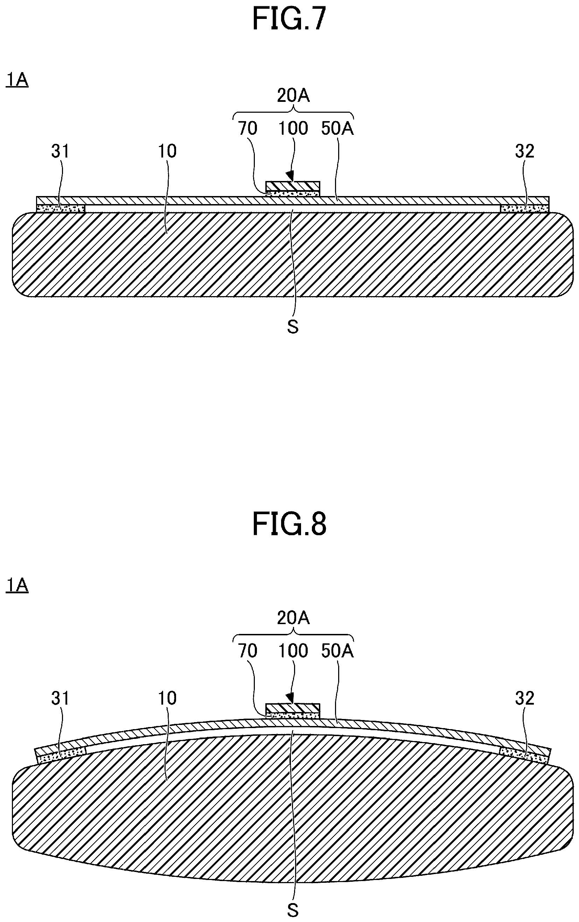

FIG. 6 is a plan view illustrating an example of a battery pack according to the second embodiment. FIG. 7 is a cross-sectional view illustrating an example of a battery pack according to the second embodiment, illustrating a cross section along the C-C line in FIG. 6.

Referring to FIGS. 6 and 7, a battery pack 1A differs from the battery pack 1 (see FIGS. 1 to 3, etc.) in that the sensor module 20 is replaced with a sensor module 20A.

The sensor module 20A is a sensor for detecting deformation of the housing 10 due to expansion of the battery. The sensor module 20A has a strain generating body 50A and the strain gauge 100 arranged on one surface of the strain generating body 50A via the adhesive layer 70.

The strain generating body 50A is a long and thin flat plate and is not bent like the strain generating body 50. The strain generating body 50A is roughly rectangular in a plan view, but has a stress concentration part 51 at a part of the strain generating body 50A. The stress concentration part 51 is a region formed so that the cross-sectional area of the strain generating body 50A in the short hand direction is smaller than other regions. The strain gauge 100 is arranged at the stress concentration part 51.

The stress concentration part 51 has two constricted parts facing each other across the strain gauge 100 in plan view. In the example illustrated in FIG. 6, the stress concentration part 51 is formed by providing two trapezoidal constricted parts facing each other across the strain gauge 100 on the two long sides of the rectangle, but is not limited to this shape. The position of the constricted parts is not necessarily limited to near the center in the longitudinal direction of the strain generating body 50A, and may be provided at a position offset from the center. For example, the constricted parts may be provided at a position in the non-adhesive region that is close to the adhesive region.

A plurality of adhesive regions adhered to the housing 10 are defined on the lower surface of the strain generating body 50A. In the example of FIG. 7, one adhesive region is defined at each end in the longitudinal direction of the strain generating body 50A, and the adhesive layer 31 is provided in the adhesive region on one end side and the adhesive layer 32 is provided in the adhesive region on the other end side. In the strain generating body 50A, the region excluding both ends is a non-adhesive region that is not adhered to the housing 10. The stress concentration part 51 is provided in the non-adhesive region.

In the longitudinal cross-sectional view of the strain generating body 50A, the length of the region between the two adhesive regions (that is, the length of the non-adhesive region) is preferably longer than the total length of the adhesive regions. The strain gauge 100 can detect strain in the non-adhesive region, and, therefore, by increasing the length of the non-adhesive region, the deformation of the housing 10 due to expansion of the battery can be detected in a longer region of the strain generating body 50A.

For example, when the housing 10 is formed of metal, if the strain gauge 100 is directly attached to the upper surface of the housing 10 without the strain generating body 50A, only strain in the region where the strain gauge 100 is attached can be detected. On the other hand, by attaching the long and thin strain generating body 50A having the strain gauge 100 to the upper surface of the housing 10 with both ends supported, strain in a wide range between two supported points can be detected.

One end side in the longitudinal direction of the strain generating body 50A is adhered to the upper surface of the housing 10 via the adhesive layer 31, and the other end side in the longitudinal direction of the strain generating body 50A is adhered to the upper surface of the housing 10 via the adhesive layer 32. The strain gauge 100 is preferably arranged on the upper surface of the strain generating body 50A near the center of the stress concentration part 51. That is, the strain gauge 100 is preferably arranged on the upper surface of the strain generating body 50A in a region having the smallest cross-sectional area in the short hand direction at the stress concentration part 51.

In the battery pack 1A, similarly to the battery pack 1, a space S is provided on the opposite side (the housing 10 side) of the region where the strain gauge 100 of the strain generating body 50A is arranged. That is, the strain gauge 100 is arranged on the upper surface of the strain generating body 50A in a region not opposite to the adhesive region. By providing the space S, the strain generating body 50A can easily expand and contract with the deformation of the housing 10 due to the expansion of the battery, and, therefore, the change in the resistance value of the strain gauge 100 increases, and the deformation of the housing 10 can be detected with high sensitivity. The material and thickness of the strain generating body 50A can be the same as that of the strain generating body 50.

Preferably, the length of the strain generating body 50A in the longitudinal direction matches the length of the housing 10. Accordingly, when attaching the strain generating body 50A to the housing 10, an attachment deviation can be reduced.

FIG. 8 is a cross-sectional view (part 2) illustrating an example of a state in which the housing is deformed by expansion of the battery. As illustrated in FIG. 8, when gas is generated inside the battery arranged in the housing 10, for example, the battery expands, and the middle portions of the upper surface and the lower surface of the housing 10 are raised, and the corners are also deformed. Then, strain is generated in the middle portion and the corners of the housing 10.

In FIG. 8, it can be seen that the strain generating body 50A is also deformed due to deformation of the housing 10 caused by expansion of the battery. As a result, the resistance value of the strain gauge 100 changes, and deformation of the housing 10 can be detected. That is, expansion of the battery housed inside the housing 10 can be detected.

In this way, when the strain generating body 50A is adhered to the housing 10, the space S is provided between the lower surface of the strain generating body 50A and the housing 10, and the strain gauge 100 is arranged on the upper surface of the strain generating body 50A above the space S which is a region not opposite to the adhesive region, so that the deformation of the housing 10 due to the expansion of the battery can be sensitively detected. In particular, by arranging the strain gauge 100 at the stress concentration part 51, the detection sensitivity of the deformation of the housing 10 due to the expansion of the battery can be improved. In the sensor module 20A, the strain gauge 100 having the Cr mixed phase film as the resistor 130 is preferably used in the same manner as in the first embodiment.

Although the preferred embodiments, etc., have been described in detail above, the present invention is not limited to the above-described embodiments, etc., and various modifications and substitutions can be made to the above-described embodiments, etc., without departing from the scope described in the claims.

For example, a stress concentration part may be provided at the strain generating body 50 having an L-shape in the cross-sectional view, and the strain gauge 100 may be arranged at the stress concentration part. Thus, the detection sensitivity of deformation of the housing 10 due to expansion of the battery can be further improved.

A plurality of sensor modules may be adhered to one housing. A sensor module may also have a plurality of strain gauges. For example, a sensor module may have four strain gauges that are connected by being fully bridged.

This international application claims priority to Japanese Patent Application No. 2021-082909 filed on May 17, 2021, the entire contents of which are incorporated herein by reference.

### Reference Signs List

1, 1A battery pack, 10 housing, 20, 20A sensor module, 31, 32 adhesive layer, 50, 50A strain generating body, 51 stress concentration part, 70 adhesive layer, 100 strain gauge, 110 base material, 110a upper surface, 130 resistor, 140 wiring, 141, 151 first metal layer, 142, 152 second metal layer, 150 electrode, 160 cover layer

## Claims

1. A sensor module comprising:
a strain generating body that is made of metal, the strain generating body being adhered to an outer surface of a housing configured to house a battery; and
a strain gauge including a Cr mixed phase film as a resistor, the strain gauge being provided on one side of the strain generating body, wherein
on another side of the strain generating body, a plurality of adhesive regions separated from each other and adhered to the housing are defined, and
the strain gauge is arranged on the one side of the strain generating body in a region that is not opposite to the adhesive regions.

2. The sensor module according to claim 1, wherein the strain generating body has an L-shape in a cross-sectional view.

3. The sensor module according to claim 2, wherein one of the adhesive regions is defined on each of a long side and a short side of the L-shape.

4. The sensor module according to claim 2 or 3, a bent portion of the L-shape is a non-adhesive region that is not adhered to the housing.

5. The sensor module according to claim 1, wherein
the strain generating body is a flat plate having a long and thin shape, and
one of the adhesive regions is defined on each of two ends in a longitudinal direction of the strain generating body.

6. The sensor module according to claim 5, wherein a length of a region between two of the adhesive regions is longer than a total length of the adhesive regions in a cross-sectional view in the longitudinal direction of the strain generating body.

7. The sensor module according to claim 5 or 6, wherein a length of the strain generating body in the longitudinal direction matches a length of the housing.

8. The sensor module according to any one of claims 1 to 7, wherein
the strain generating body includes a stress concentration part, and
the strain gauge is arranged at the stress concentration part.

9. The sensor module according to claim 8, wherein the stress concentration part includes two constricted parts facing each other across the strain gauge in a plan view.

10. The sensor module according to any one of claims 1 to 9, wherein the adhesive region is provided with an adhesive layer.

11. A battery pack to which the sensor module according to any one of claims 1 to 10 is adhered to the outer surface of the housing configured to house the battery.
